# FASCICULE DE BREVET EUROPEEN

(11) **EP 1 655 827 B1**
(45) Date de publication et mention de la délivrance du brevet: **03.03.2010**
(21) Numéro de dépôt: 05354033.2
(22) Date de dépôt: 22.09.2005
(51) Int. Cl.: H02M 5/458

(54) **Dispositif et procédé de commande d'un convertisseur d'énergie électrique et convertisseur comportant un tel dispositif**
Anordnung ung und Verfahren zum Steuern eines Energiewandlers und Wandler mit einer derartigen Anordnung
Device and method for controlling an energy converter and converter with such device

(30) Priorité: 27.09.2004 FR 0410168
(43) Date de publication de la demande: 10.05.2006
(73) Titulaire: MGE UPS Systems, 38334 Saint-Ismier Cedex (FR)
(72) Inventeur: Baudesson, Philippe, 38050 Grenoble Cedex 09 (FR); Bouvet, Francois, 38050 Grenoble Cedex 09 (FR); Almeida, Antonio, 38050 Grenoble Cedex 09 (FR); Fiorina, Jean-Noel, 38050 Grenoble Cedex 09 (FR)
(74) Mandataire: Tripodi, Paul

(56) Documents cités:
- US-A- 5 654 591
- US-A- 5 889 661
- US-A- 6 023 417
- US-A1- 2002 180 379
- US-A1- 2003 155 893
- US-B1- 6 271 633

## Description

### DOMAINE TECHNIQUE

L'invention concerne un dispositif de commande d'un convertisseur d'énergie électrique comportant des moyens de contrôle de la conduction de bras de semi-conducteurs,
ledit convertisseur d'énergie électrique comportant :
- des moyens de redressement pour recevoir une tension ou un courant électrique d'entrée et pour fournir une tension continue sur des lignes intermédiaires de tension continue,
- des moyens de filtrage de tension continue connectés sur lesdites lignes intermédiaires,
- des moyens de conversion ayant au moins deux bras connectés entre lesdites lignes de tension continue et des sorties pour convertir ladite tension continue en tensions alternatives de sortie, et
- une liaison commune de conducteur de neutre ou terre ou de masse entre une entrée et une sortie,
lesdits moyens de contrôle contrôlant la conduction desdits bras des moyens de conversion et comportant des moyens de traitement pour fournir des signaux de modulation de signaux de commande desdits bras.

L'invention concerne aussi un tel convertisseur comportant ledit dispositif de commande et un procédé de contrôle d'un tel convertisseur.

### ETAT DE LA TECHNIQUE

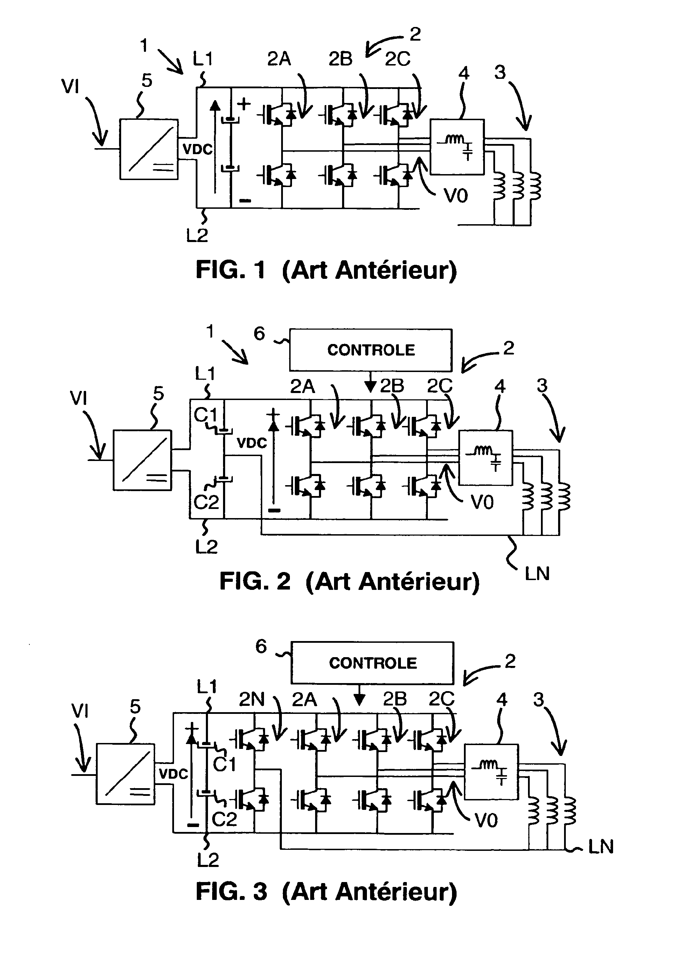

Les convertisseurs d'énergie électrique connus sont notamment utilisés dans les alimentations sans interruption, et les variateurs de vitesse pour moteurs électrique ou associés à des générateurs d'énergie pour le couplage à un réseau de distribution. Un tel convertisseur 1 représenté sur la figure 1 comporte généralement des lignes L1 et L2 de tension continue VDC et un onduleur 2 formé par des bras 2A, 2B, 2C de semi-conducteurs de puissance connectés entre les lignes L1 et L2 pour fournir en sortie des tensions alternatives VO à une charge 3 ou à un réseau de distribution électrique. Lorsque les bras sont commandés en fréquence élevée notamment en modulation de largeur d'impulsion des filtres électriques 4 peuvent être intercalés entre les sorties des bras 2A, 2B, 2C et la charge 3 ou le réseau. Souvent un redresseur 5 connecté entre des entrées VI à courant alternatif et les lignes L1 et L2 fournit la tension continue VDC. Des condensateurs C1 et C2 connectés aux lignes L1 et L2 assurent le filtrage de la tension continue VDC.

Lorsque la charge est déséquilibrée, il est nécessaire de distribuer un conducteur de neutre en sortie pour assurer des tensions correctes. Sur la figure 2, la charge comporte un conducteur de neutre LN connecté à un point milieu des condensateurs C1 et C2 de filtrage. Généralement ses condensateurs ont des valeurs très élevées pour assurer une bonne stabilité de la tension même avec des courants de neutre très forts. Un dispositif de contrôle 6 commande les semi-conducteurs des bras pour fournir des tensions alternatives référencées notamment par rapport au conducteur de neutre.

Pour augmenter le niveau de contrôle du courant et de la tension de neutre, en particulier en cas de surmodulation de la commande des bras de l'onduleur 2, la ligne de neutre LN peut être connectée à un quatrième bras 2N de l'onduleur 2. Sur la figure 3, le bras 2N est connecté comme les autres bras entre les lignes L1 et L2 de tension continue.

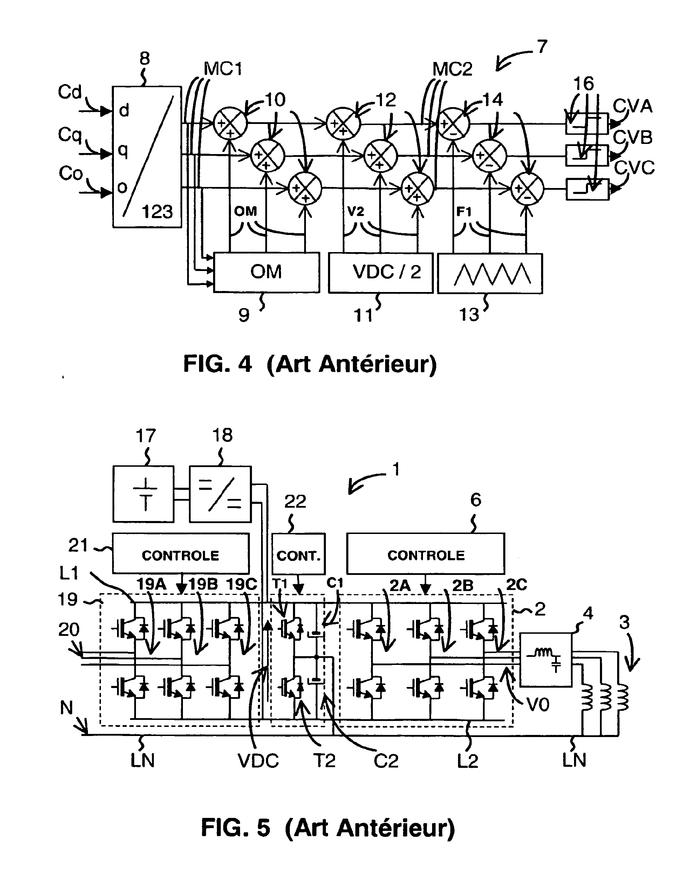

La figure 4 montre un exemple d'une partie d'une unité de traitement 7 d'un circuit de contrôle 6 pour fournir des signaux de commande des bras. Dans ce circuit, un régulateur 8 permet de réguler et de fournir des signaux de modulation triphasés en fonction de consignes réduites Cd, Cq, Co, notamment par une transformation de Park ou Concordia dans les domaines dqo ou αβo. Ces transformations et rotations connues sont calculées généralement à l'aide de matrices dites respectivement de Park et de Concordia. Des signaux MC1 pour chaque phase en sortie du régulateur sont de préférence utilisés pour une modulation de type intersective sur un signal triangulaire de porteuse haute fréquence permettant une modulation en largeur d'impulsion. Sur le schéma de la figure 4, le régulateur 8 fournit des premiers signaux MC1 de modulation triphasés, un module 9 détermine des signaux OM de surmodulation à appliquer aux premiers signaux MC1 avec des opérateurs 10, un module 11 applique une tension de référence V2 audits signaux MC 1 par des opérateurs 12, et un module 13 fournit un signal haute fréquence destiné à être modulé par des signaux de modulation MC2 modifiés par les opérateurs 10 et 12. Des opérateurs 14 combinent les signaux de modulation MC2 avec des signaux haute fréquence F1 de préférence triangulaire pour fournir des signaux de commande CVA, CVB et CVC des bras d'onduleur 2A, 2B, 2C au format de modulation de largeur d'impulsion. Les commandes des bras étant de préférence binaire en saturé-bloqué, un circuit de conditionnement 16 met en forme les signaux de commande. Les signaux OM de surmodulation sont générés par les signaux de modulation MC1 et par le type de surmodulation. Le signal V2 de référence est généralement représentatif d'une tension continue, par exemple de la moitié de la tension VDC des lignes L1 et L2.

La figure 5 représente un convertisseur connu à neutre commun ou à neutre traversant. Ce convertisseur utilisé comme une alimentation sans interruption comporte une batterie 17 connectée à travers un adaptateur 18 aux lignes L1 et L2 de tension continue. De manière connue, ce convertisseur comporte un redresseur 19 à trois bras 19A, 19B et 19C reliés à des entrées 20 de tensions ou de courants alternatifs et aux lignes L1 et L2 de tension continue VDC. Un circuit de contrôle 21 du redresseur commande les bras du redresseur en fonction de la tension continue VDC et des courants à prélever sur un réseau connecté en entrée 20. Les condensateurs de filtrage ont un point commun connecté à la ligne LN de neutre traversant. La tension du point commun des condensateurs est généralement une tension médiane entre les lignes L1 et L2 dont la valeur est réglée par des semi-conducteurs T1 et T2 de régulation de tension contrôlés par un circuit 22 de commande de régulation. Sur cette figure, un onduleur du même type que celui de la figure 2 est connecté sur les lignes L1 et L2 et sur le point milieu des condensateurs.

Dans les convertisseurs sans point milieu sur les condensateurs, notamment dans les convertisseurs des figures 1 et 3 triphasés ou triphasés plus neutre indépendant, les condensateurs n'ont pas besoin d'être de valeurs très élevées. Dans les convertisseurs du type de celui de la figure 2, lorsque le neutre est relié à un point commun des condensateurs C1 et C2 la valeur des condensateurs est élevée pour absorber les courants de neutre sans trop perturber la tension continue VDC. Cependant, dans des convertisseurs avec un neutre traversant LN entre des entrées reliées à un redresseur et des sorties d'un onduleur comme celui de la figure 5, la valeur et la taille des condensateurs de filtrage C1 et C2 peut devenir très élevées. Les valeurs élevées des condensateurs sont dues notamment au filtrage et à l'absorption des courants de neutre de la charge alimentée par l'onduleur ainsi que les courants de neutre de la source qui alimente le redresseur. Des valeurs élevées des capacités des condensateurs permettent dans ce cas d'assurer une indépendance entre les structures de l'onduleur et celles du redresseur. Ainsi, des forts courants de neutre du coté onduleurs ont peu d'effets perturbateurs sur le redresseur ou sur les courants de la source.

Les dispositifs connus de l'état de la technique à neutre traversant tels que celui de la figure 5 ont des valeurs de capacités de condensateurs très élevées qui impliquent des coûts très considérables lorsque la puissance du convertisseur est élevée. De plus, dans un tel convertisseur, le couplage des courants de neutre ne permet pas de réduire la puissance dans les semi-conducteurs par une surmodulation sur les commandes des bras de l'onduleur et du redresseur lorsque les courants sont déséquilibrés. Le manque de surmodulation dans les commandes provoque une perte de puissance lors de la commutation des semi-conducteurs et impose une tension continue plus élevée et un rendement électrique du convertisseur plus bas. L'introduction de bras supplémentaires de neutre pour l'onduleur et le redresseur à quatre bras n'est pas possible avec un neutre traversant car les dispositifs de contrôle connus ne permettent pas de contrôler des courants de neutre de l'onduleur et du redresseur de manière suffisamment indépendante pour limiter le couplage entre le redresseur, l'onduleur et les lignes de tension continue.

Le document US 2003 0155893 A1 décrit un dispositif de commande pour convertisseur à neutre commun.

### EXPOSE DE L'INVENTION

L'invention concerne un convertisseur comportant un dispositif de commende selon la revendication 1 et un procédé de contrôle selon la revendication 13.

L'invention a pour but un dispositif et un procédé de commande d'un convertisseur d'énergie électrique et un convertisseur comportant un tel dispositif permettant de résoudre les problèmes des convertisseurs à neutre traversant de l'état de la technique.

Dans un dispositif de commande selon l'invention lesdits moyens de contrôle commandent un bras commun comportant des composants électroniques de puissance connectés entre lesdites lignes intermédiaires de tension continue et la liaison commune, lesdits moyens de traitement commandant ledit bras commun en fonction d'un signal de modulation dudit bras commun déterminé avec une consigne de tension de référence ayant une valeur représentative d'une tension entre lesdites lignes intermédiaires.

Dans un mode de réalisation préférentiel :
- les moyens de commande commandent des bras des moyens de conversion, des bras des moyens de redressement, et le bras commun,
- les moyens de traitement fournissant des signaux de modulation pour chaque bras en fonction de signaux représentatifs d'une consigne de tension de référence, et
- lesdits signaux de modulation modulant des signaux de porteuse de même nature pour chaque bras.

De préférence, les signaux représentatifs de tension de référence sont les mêmes pour la détermination des signaux de modulation de chaque bras modulé du convertisseur et les signaux de porteuse sont les mêmes pour la détermination des signaux de commande de chaque bras du convertisseur.

Avantageusement, les moyens de traitement comportent des moyens de détermination d'une composante générale de commande pour le traitement d'une surmodulation, ladite composante générale de commande étant déterminée en fonction de premiers signaux de modulation des bras des moyens de conversion, et un signal représentatif de la composante générale de commande est utilisé pour traiter des signaux de modulation des bras des moyens de conversion et un signal de modulation du bras commun.

Avantageusement, les moyens de traitement utilisent un signal représentatif de la composante générale de commande pour traiter des signaux de modulation des bras des moyens de redressement.

Dans un mode de réalisation particulier, les moyens de traitement comportent des moyens de correction pour corriger ladite composante générale de commande en fonction de signaux représentatifs de saturation de premiers signaux de modulation des moyens de redressement.

Avantageusement, les moyens de correction comportent des moyens de prévision de valeurs de saturation et des moyens de réduction d'un signal représentatif de la composante générale commande en fonction desdites valeurs de saturation.

Un convertisseur d'énergie électrique selon un mode de réalisation de l'invention comporte :
- des moyens de redressement pour recevoir une tension ou un courant électrique sur des entrées et pour fournir une tension continue sur des lignes intermédiaires de tension continue,
- des moyens de filtrage de tension continue connectés sur les lignes intermédiaires,
- des moyens de conversion ayant au moins deux bras, connectés entre lesdites lignes de tension continue et des sorties, pour convertir ladite tension continue en tensions alternatives de sortie,
- une liaison commune de conducteur de neutre, de masse ou de terre entre une entrée et une sortie,
   des moyens de contrôle pour contrôler la conduction des bras desdits moyens de conversion et comportant des moyens de traitement pour fournir des signaux de modulation de signaux de commande desdits bras, et
- un bras commun comportant des composants électroniques de puissance connectés entre lesdites lignes intermédiaires de tension continue et la liaison commune et un dispositif de commande tel que défini ci-dessus pour commander ledit bras commun en fonction d'un signal de modulation dudit bras commun déterminé avec une consigne de tension de référence.

Avantageusement, lesdits moyens de traitement fournissent des signaux de modulation des bras des moyens de conversion représentatifs de tensions différentes des tensions correspondantes des tensions d'entrée des moyens de redressement.

Avantageusement, lesdits moyens de traitement fournissent des signaux de modulation des bras des moyens de conversion ayant une fréquence fondamentale de fréquence différente de la fréquence fondamentale de la tension d'entrée des moyens de redressement.

Avantageusement, lesdits moyens de traitement fournissent des signaux de modulation des bras des moyens de conversion ayant des phases différentes des phases de la tension d'entrée des moyens de redressement.

Avantageusement, lesdits moyens de contrôle du dispositif de commande contrôlent la conduction des bras desdits moyens de conversion et des bras de moyens de redressement de manière réversible, des sorties vers une charge devenant des entrées d'énergie, les moyens de conversion devenant des moyens de redressement, et les entrées devenant des sorties pour fournir de l'énergie électrique à courant alternatif.

Un procédé de commande selon l'invention d'un convertisseur d'énergie électrique comportant :
- des moyens de redressement pour recevoir une tension ou un courant électrique d'entrée et pour fournir une tension continue sur des lignes intermédiaires de tension continue,
- des moyens de filtrage de tension continue connectés sur les lignes intermédiaires,
- des moyens de conversion ayant au moins deux bras connectés entre lesdites lignes de tension continue et des sorties pour convertir ladite tension continue en tensions alternatives de sortie,
- une liaison commune de conducteur de neutre, de masse ou de terre entre une entrée et une sortie,
- un bras commun comportant des composants électroniques de puissance connectés entre lesdites lignes intermédiaires de tension continue et la liaison commune, et
- des moyens de contrôle contrôlant la conduction des bras desdits moyens de conversion et comportant des moyens de traitement pour fournir des signaux de modulation de signaux de commande desdits bras,
comporte une première étape de détermination de premiers signaux de modulation pour la commande de bras des moyens de conversion, et une première étape d'application pour appliquer une consigne de tension de référence à un signal de modulation du bras commun et à des signaux de modulation pour la commande de bras des moyens de conversion.

De préférence, le procédé comporte une seconde étape de détermination d'une valeur de composante générale de commande, et une seconde étape d'application pour appliquer ladite composante générale de commande audits signaux de modulation.

De préférence, le procédé comporte une troisième étape d'application pour appliquer à des signaux de modulation pour la commande de bras des moyens de redressement une consigne de tension de référence et de la valeur de composante générale de commande.

Avantageusement, le procédé comporte une étape de détection de saturation de signaux de modulation de commande de bras des moyens de redressement, et une étape de correction de la valeur de composante générale de commande en fonction de la détection de saturation de signaux de modulation de bras des moyens de redressement.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- les figures 1 à 3 représentent des schémas de convertisseurs avec des onduleurs de types connus ;
- la figure 4 représente un schéma bloc d'un dispositif de contrôle de type connu ;
- la figure 5 représente un schéma d'un convertisseur à neutre traversant de type connu ;
- la figure 6 représente un schéma d'un convertisseur selon un mode de réalisation de l'invention ;
- les figures 7 à 9 représentent des schémas bloc de variantes d'unité de traitement de dispositifs de commande selon des modes de réalisation de l'invention ;
- la figure 10 représente un schéma bloc d'un module de correction d'une composante générale de commande pour un dispositif de commande selon un mode de réalisation de l'invention ;
- la figure 11 représente un organigramme selon un exemple d'un procédé selon l'invention ;
- la figure 12 illustre un type de signal de surmodulation applicable à une composante générale de commande ;
- les figures 13A à 13C représentent des signaux de modulation comportant une composante générale de commande dans un dispositif de commande selon un mode de réalisation de l'invention ;
- la figure 14 représente des signaux de saturation de la commande de bras d'un redresseur ; et
- les figures 15A à 15C, 16A à 16C et 17A à 17C illustrent des exemples de signaux montrant la correction de composante générale de commande.

### DESCRIPTION DETAILLEE DE MODES DE REALISATION PREFERES

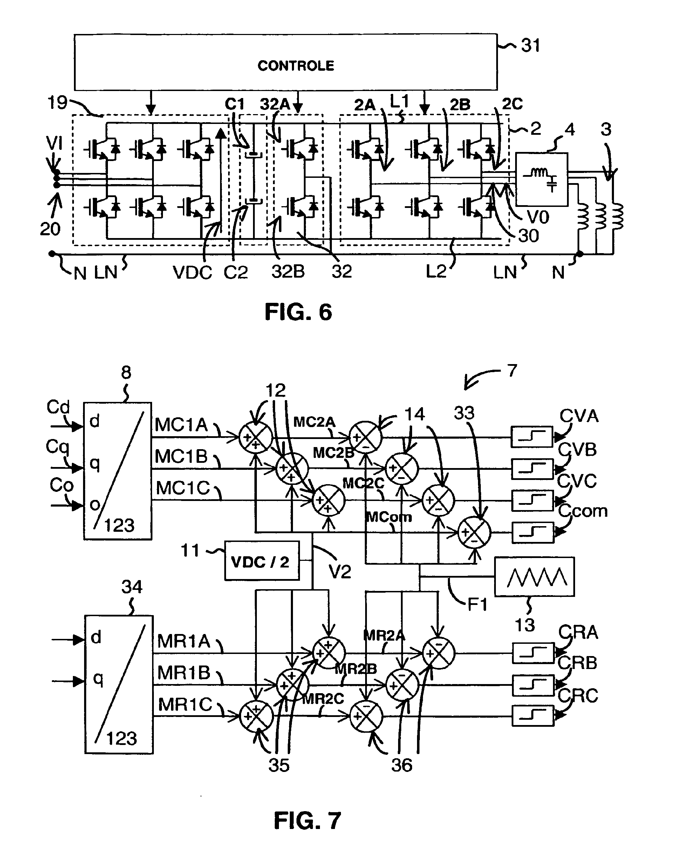

Le convertisseur d'énergie électrique représenté sur la figure 6 comporte :
- un redresseur 19 pour recevoir une tension VI ou un courant électrique sur des entrées 20 et pour fournir une tension continue VDC sur des lignes L1 et L2 intermédiaires de tension continue,
- des condensateurs C1 et C2 de filtrage de tension continue connectés sur les lignes intermédiaires,
- des moyens de conversion tel qu'un onduleur 2 ayant au moins deux bras 2A, 2B et 2C connectés entre lesdites lignes L1 et L2 de tension continue et des sorties 30 pour convertir ladite tension continue en tensions alternatives VO de sortie,
- une liaison commune LN de conducteur de neutre N ou de référence, et
- un dispositif de contrôle 31 contrôlant la conduction des bras 2A, 2B, 2C desdits moyens de conversion 2 et comportant un circuit de traitement 7 pour fournir des signaux de modulation MC2 de signaux CVA, CVB, CVC de commande desdits bras.

Dans ce convertisseur d'énergie électrique selon un mode de réalisation de l'invention, le convertisseur comporte un bras commun 32 comportant des composants électroniques 32A et 32B de puissance connectés entre lesdites lignes intermédiaires L1 et L2 de tension continue VDC et la liaison commune LN de neutre. Le bras commun supplémentaire 32 permet de contrôler les courants de neutre en permettant un niveau de contrôle supplémentaire afin de diminuer la taille des condensateurs. Avantageusement, les courants de neutre passant dans ce bras supplémentaire permettent aussi de pouvoir introduire une surmodulation contrôlée et de réduire la tension de la ligne de tension continue pour réduire des pertes par commutation. Le dispositif de commande 31 commande ledit bras commun 32 en fonction d'un signal de modulation MCom dudit bras commun déterminé avec une consigne V2 de tension de référence. Le signal de modulation MCom du bras commun module un signal de porteuse F1 qui est de préférence proche ou semblable à un signal F1 de porteuse utilisé pour la commande des bras de l'onduleur et des bras du redresseur.

La consigne de tension de référence V2 pour des signaux de modulation du bras commun est de préférence proche ou semblable à des consignes V2 de tension de référence pour des signaux de modulation des bras de l'onduleur 2 et des bras de l'onduleur 19.

Ainsi, la commande du bras commun, la commande des bras de l'onduleur et la commande des bras du redresseur ont les mêmes bases de signal de porteuse F1 et de consigne de tension de référence V2. Avec de telles bases, les signaux de modulation représentatifs des tensions d'entrée du redresseur et de sortie de l'onduleur peuvent être indépendants puisque les courants de neutre pouvant circuler dans le bras commun sont synchronisés par le signal de porteuse F1. Dans ce cas, même avec un neutre traversant, les caractéristiques des tensions et courants du réseau d'entrée peuvent être différents des caractéristiques des tensions de sortie de l'onduleur. Par exemple, la tension de sortie VO de l'onduleur peut avoir une valeur de tension différente de la tension VI du réseau d'entrée, mais aussi une phase différente ou une fréquence différente.

Dans un mode de réalisation particulier de réalisation, ce convertisseur à neutre traversant peut fonctionner aussi de manière réversible. Dans ce cas, le dispositif de commande contrôle la conduction des bras de l'onduleur et des bras du redresseur de manière réversible. Des sorties vers une charge deviennent alors des entrées d'énergie, l'onduleur devient un redresseur, et les entrées deviennent des sorties pour fournir de l'énergie électrique à courant alternatif.

La figure 7 représente un schéma bloc d'une unité de traitement 7 d'un circuit de contrôle 31 d'un dispositif de commande selon un mode de réalisation de l'invention. Le dispositif de commande est destiné notamment à commander la conduction de bras de semi-conducteurs d'un convertisseur d'énergie électrique selon la figure 6.

Le circuit de contrôle contrôle la conduction des bras 2A, 2B, 2C de l'onduleur et comporte une unité de traitement 7 pour fournir des signaux de modulation MC2A, MC2B et MC2C de signaux de commande CVA, CVB, CVC desdits bras.

Selon un mode de réalisation de l'invention, le circuit de contrôle commande un bras commun 32 comportant des composants électroniques de puissance 32A et 32B connectés en série entre lesdites lignes intermédiaires L1 et L2 de tension continue VDC et connectés à la liaison commune de neutre LN par leur point milieu commun. L'unité de traitement module ledit bras commun en fonction d'un signal de modulation Mcom déterminé avec une consigne de tension de référence V2. Le signal Mcom de modulation du bras commun est combiné dans un opérateur 33 pour moduler un signal de porteuse de F1.

Sur le schéma de la figure 7, un régulateur 8 fournit des premiers signaux MC1A, MC1B et MC1C triphasés de modulation de l'onduleur 2, et un second régulateur 34 fournit des premiers signaux MR1A, MR1B, MR1C triphasés de modulation du redresseur 19. Les premiers signaux de modulation de l'onduleur sont combinés dans des opérateurs 12 avec une consigne de tension de référence V2 pour fournir des seconds signaux de modulation de l'onduleur modifiés respectivement MC2A, MC2B, MC2C. Les premiers signaux de modulation du redresseur sont combinés dans des opérateurs 35 avec une consigne de tension de référence V2 pour fournir des seconds signaux de modulation modifiés respectivement MR2A, MR2B, MR2C du redresseur. Les signaux de modulation modifiés MR1A, MR1B, MR1C et MC2A, MC2B, MC2C sont combinés dans des opérateurs respectivement 14 et 36 pour moduler des signaux de porteuse F1. Pour la modulation des bras de l'onduleur, du redresseur et du bras commun la consigne V2 appliquée aux opérateurs 12, 35, 33 est de même nature et la porteuse F1 appliquée aux opérateurs 14, 36 et 33 est de même nature. Avantageusement, une même tension V2 est appliquée aux opérateurs 12, 35 et 33, et/ou un même signal de porteuse F1 est appliqué aux opérateurs 14, 36 et 33. Des signaux CVA, CVB, CVC modulés sont destinés à la commande des bras de l'onduleur, des signaux CRA, CRB, CRC modulés sont destinés à la commande des bras du redresseur et un signal Ccom est destinés à la commande du bras commun. La modulation des signaux est de préférence en modulation de largeur d'impulsion modulée par exemple dans les opérateurs 14, 36 et 33 selon une méthode dite intersective.

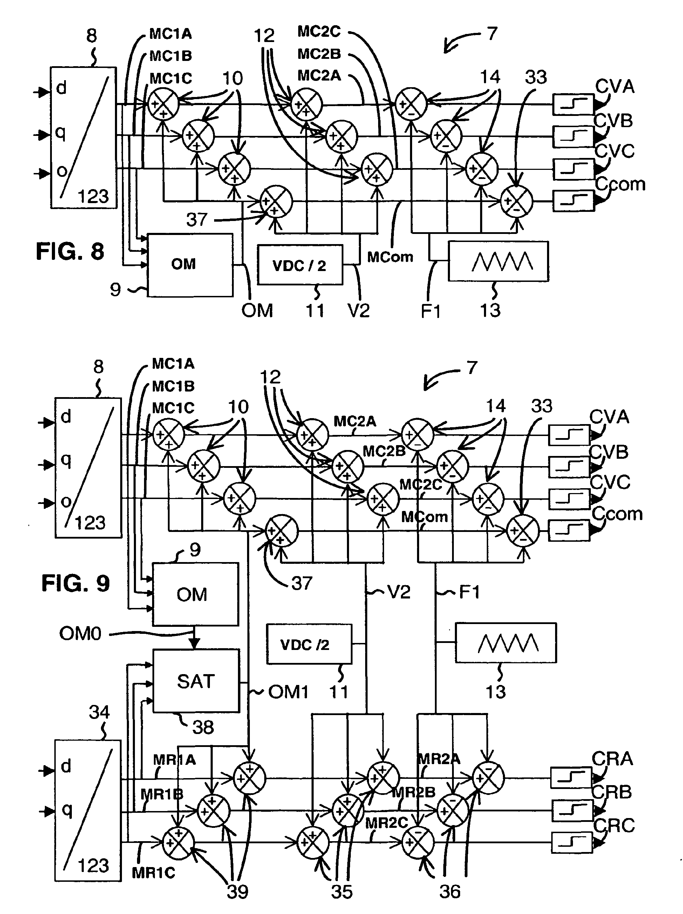

La figure 8 représente un schéma bloc d'un circuit de contrôle 31 d'un dispositif de commande avec une fonction de surmodulation. Sur ce schéma un module 9 reçoit les premiers signaux de modulation de l'onduleur MC1A, MC1B, MC1C fournis par le régulateur et détermine une composante générale de commande OM comportant des signaux de surmodulation et de commande du bras commun 32. Cette composante OM est combinée avec les premiers signaux de modulation de l'onduleur MC1A, MC1B, MC1C dans des opérateurs 10 et combinée avec le signal de consigne de tension de référence V2 dans un opérateur 37 pour fournir un signal de modulation MCom du bras commun.

Pour éviter des perturbations des courants de neutre, un signal représentatif de la composante générale de commande est également appliqué pour le traitement des signaux de modulation du redresseur. Mais, puisque les tensions, les fréquences et les phases peuvent être différentes entre l'entrée et la sortie du convertisseur et que la tension de la tension continue intermédiaire doit rester limitée pour ne pas augmenter la puissance dissipée, il y a un risque de saturation des signaux de commande des bras. Ainsi, le dispositif de commande de la figure 9 comporte un module 38 de détection de saturation. Le module 38 reçoit les premiers signaux MR1A, MR1B, MR1C de modulation des bras du redresseur et un premier signal OMO de composante générale de commande. Le module 38 détecte le risque d'une saturation et corrige le signal de composante générale de commande OM0 en fonction d'un dépassement d'une valeur limite de saturation. En sortie du module 38, un nouveau signal de OM1 de composante générale corrigée est combiné avec les premiers signaux de modulation des bras de l'onduleur dans des opérateurs 10, avec les premiers MR1A, MR1B, MR1C de modulation des bras du redresseur dans des opérateurs 39, et avec le signal de tension de référence V2 dans un opérateur 37 pour la commande du bras commun. De préférence, les signaux de modulation des bras de l'onduleur sont aussi combinés dans des opérateurs 12 avec le signal V2 de tension de référence et dans des opérateurs 14 avec un signal de porteuse F1, et les signaux de modulation des bras du redresseur sont aussi combinés dans des opérateurs 35 avec le signal V2 de tension de référence et dans des opérateurs 36 avec un signal de porteuse F1. L'opérateur 37 fourni un signal Mcom de modulation du bras commun résultant de la composante générale de commande corrigée OM1 et du signal de tension de référence V2. Le signal Mcom est combiné avec le signal de porteuse dans l'opérateur F1.

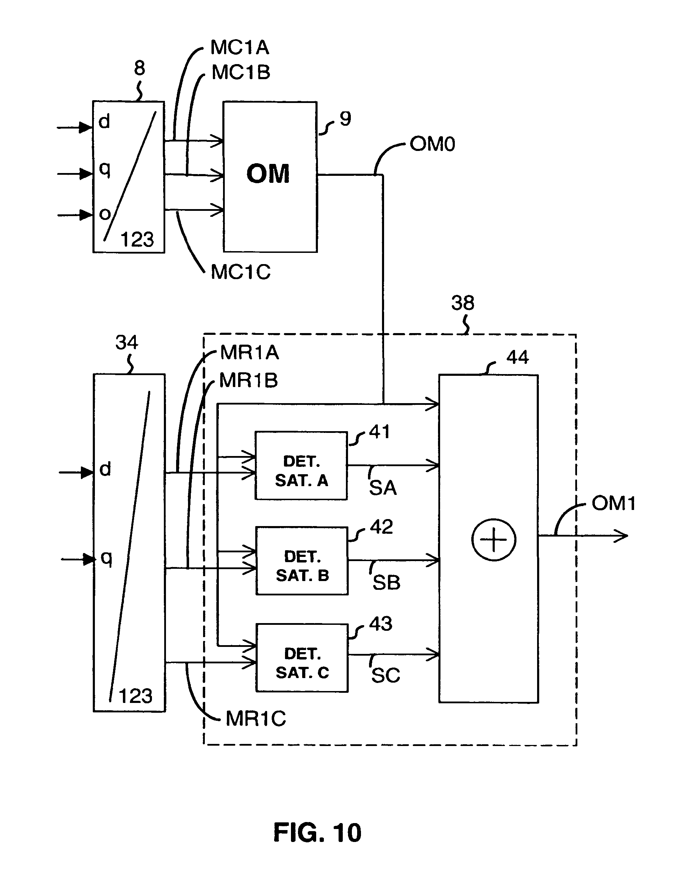

La figure 10 représente un exemple de schéma bloc d'un module 38 de correction d'une composante générale de commande. Ladite composante générale de commande est corrigée en fonction de signaux représentatifs de saturation des signaux de modulation des moyens de redressement. Le module 38 comporte des modules 41, 42, 43 de détermination de valeur de saturation respectivement SA, SB, SC pour chaque signal de modulation des bras du redresseur. Les modules 41, 42, 43 reçoivent en entrée les premiers signaux respectivement MR1A, MR1B, MR1C de modulation du redresseur et le premier signal de la composante générale de commande OM0 et fournissent en sortie des signaux de valeur de saturation respectivement SA, SB, SC. Si un risque de saturation est détecté, le premier signal de composante générale de commande et les signaux de valeur de dépassement de saturation SA, SB, SC sont combinés dans un opérateur 44 pour corriger le premier signal de composante générale de commande et pour fournir un nouveau signal, ou une nouvelle valeur OM1 d'une composante générale de commande. Par exemple, les modules 41, 42, et 43 déterminent ou prévoient des valeurs de saturation SA, SB, SC et l'opérateur 44 réduit un signal représentatif de la composante générale de commande OM1 en fonction desdites valeurs de saturation.

Dans un dispositif selon un mode de réalisation de l'invention, la composante générale de commande, le signal de porteuse et/ou le signal de tension de référence sont communs à l'ensemble du traitement des bras de l'onduleur, du redresseur et du bras commun.

Cependant, l'unité de traitement peut fournir des signaux de modulation des bras de l'onduleur ayant des tensions différentes des tensions correspondantes des tensions d'entrée du redresseur et/ou des signaux de modulation des bras de l'onduleur ayant une fréquence fondamentale de fréquence différente de la fréquence fondamentale de la tension d'entrée du redresseur et/ou des signaux de modulation des bras de l'onduleur ayant des phases différentes des phases de la tension d'entrée du redresseur.

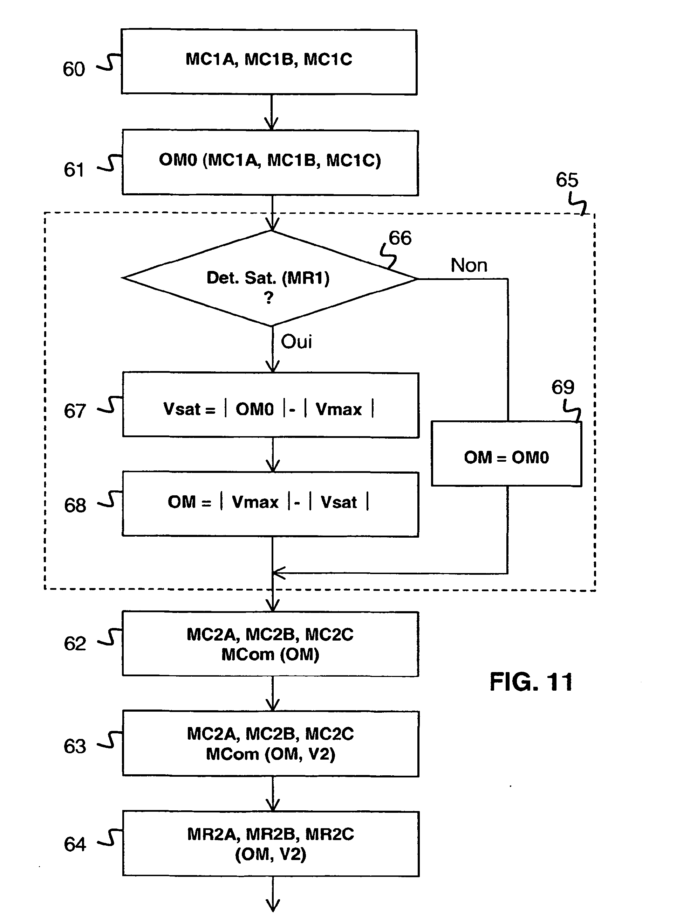

La figure 11 représente un exemple d'organigramme d'un procédé de commande d'un convertisseur d'énergie électrique selon l'invention. Le procédé comporte une première étape 60 de détermination de signaux de modulation MC1A, MC1B, MC1C pour la commande de bras de l'onduleur. Puis, une seconde étape de détermination 61 détermine une valeur de composante générale de commande OM0 en fonction des premiers signaux de modulation de l'onduleur et éventuellement du type de surmodulation choisi. A une étape 62, une valeur représentative de ladite composante générale de commande est appliquée audits signaux de modulation de l'onduleur et du bras commun. Une étape 63 permet d'appliquer aux signaux de modulation des bras de l'onduleur MC1A, MC1B, MC1C et à un signal de modulation Mcom du bras commun une consigne de tension de référence V2. Une troisième étape 64 de détermination détermine des signaux de modulation pour la commande de bras du redresseur en fonction d'une consigne de tension de référence V2 et d'une valeur de composante générale de commande OM.

Dans cet organigramme, une phase 65 de gestion de saturation comporte des étapes de correction de la composante générale de commande en cas de risques de saturation de la commande des bras du redresseur. Dans cette phase, une étape 66 de détection détecte un risque de saturation de signaux de modulation de commande de bras du redresseur, une étape 67 détermine une valeur de dépassement de saturation Vsat en évaluant ledit dépassement d'une première valeur de la composante générale de commande OMO avec une valeur limite de saturation Vmax. Puis, une étape 68 de correction corrige la valeur de composante générale de commande OM en fonction de la détection de saturation Vsat de signaux de modulation de bras du redresseur. Si des saturations ne sont pas détectées, la composante générale de commande OM n'est pas corrigée et une étape 69 applique la première de la composante générale de commande OM0 à la composante OM.

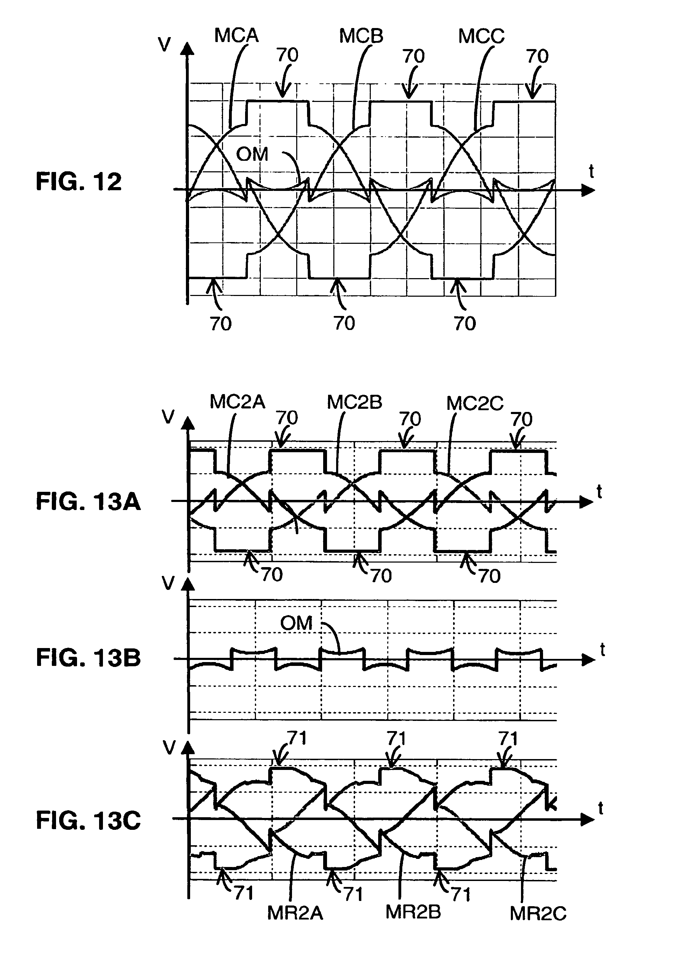

La figure 12 représente un type de signaux de modulation de bras d'onduleur et de surmodulation applicables à une composante générale de commande. Des signaux MCA, MCB, MCC sont des signaux triphasés comportant une surmodulation 70 plate sur la crête de la sinusoïde. Le signal OM de la composante générale de commande est déterminé en fonction des signaux de modulation MCA, MCB, MCC. Dans ce cas, cette composante générale OM compense la surmodulation pour restituer une forme sinusoïdale par une modulation à bas niveau sur les autres bras.

La figure 13A montre des signaux de modulation MC2A, MC2B, MC2C pour moduler la commande de bras d'un onduleur. La figure 13B montre des signaux OM de composante générale de commande générés en fonction des signaux de modulation de l'onduleur qui sont prioritaires. La figure 13C représente des signaux de modulation MR2A, MR2B, MR2C de bras d'un redresseur comportant aussi une surmodulation mais dont les formes des tensions ne sont pas synchronisées avec celles de l'onduleur. Sur les signaux de modulation du redresseur non prioritaire et n'entrant pas dans la constitution de la composante générale de commande des saturations 71 peuvent apparaître.

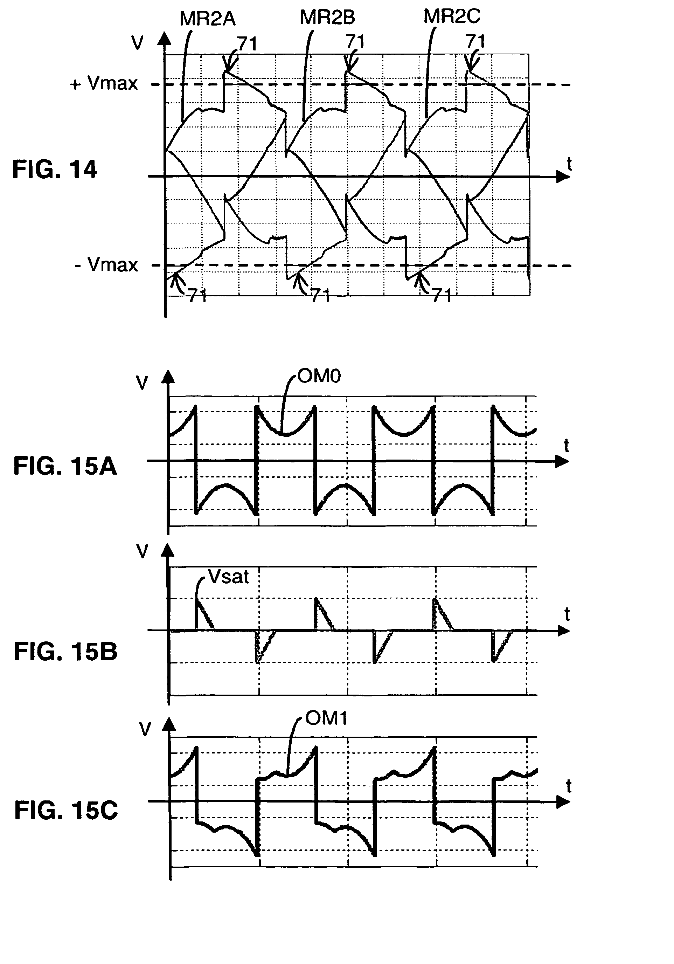

La figure 14 représente des signaux montrant un exemple de saturation de la commande de bras d'un redresseur. Les signaux MR2A, MR2B et MR2C de modulation sont représentatifs aussi des signaux d'entrée de tension du redresseur. Lorsque les signaux de modulation dépassent une valeur limite de saturation Vmax un risque de saturation 71 est possible. La tension Vmax, est aussi représentative ou dépend de la tension des lignes de tension continue VDC ou de la tension de référence V2. Des valeurs de saturation peuvent être définies par la différence entre la valeur limite Vmax et les valeurs des premiers signaux de modulation MR1A, MR1B et MR1C des bras du redresseur.

Pour réduire ou éliminer ce risque de saturation, la composante générale de commande peut avantageusement être corrigée notamment en fonction des valeurs de saturation. La figure 15A montre une première composante générale de commande de OMO déterminée en fonction de premiers signaux MC1A, MC1B, MC1C de modulation d'un onduleur. La figure 15B montre un exemple de signaux de valeurs de saturation Vsat déterminés en fonction de la première composante générale de commande OMO et des premiers signaux MR1A, MR1B et MR1C de modulation de bras du redresseur. La figure 15C montre un second signal OM1 de commande générale corrigé en fonction des signaux de valeurs de saturation.

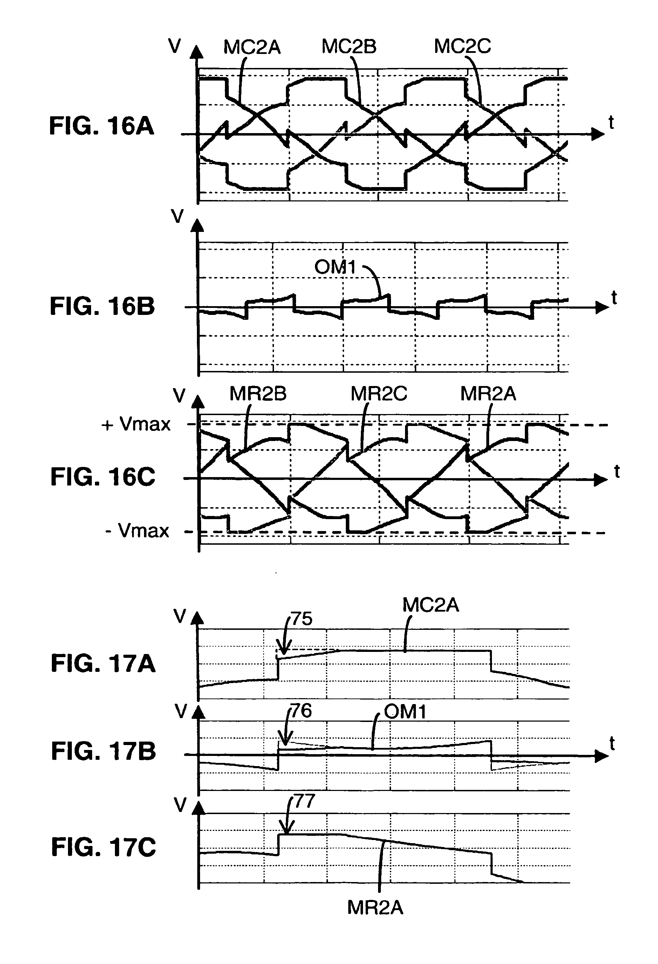

La figure 16A montre des signaux MC2A, MC2B, MC2C de modulation de bras d'onduleur comportant une surmodulation corrigée avec un second signal de composante générale de commande OM1 corrigée. Un exemple de forme d'un second signal corrigé OM1 d'une composante générale de commande est représenté sur la figure 16B. La figure 16C montre des signaux MR2A, MR2B, MR2C de modulation de corrigé et limités à une valeur maximale Vmax en fonction de la correction de la composante générale de commande. Les figures 17A à 17C représentent des signaux équivalents aux signaux des figures 16A à 16C correspondantes. Sur la figure 17A, le signal MC2A comporte une partie rognée 75 correspondant à la correction de la composante générale de commande OM1. Sur la figure 17B, le signal de la composante générale de commande OM1 comporte une partie rognée 76 correspondant à la correction pour éliminer ou diminuer les effets des risques de saturation. La figure 17C montre en détail une partie limitée du signal MR2A de modulation d'un bras du redresseur.

Des dispositifs de conversion selon des modes de réalisation peuvent être notamment des alimentations sans interruption, des variateurs de vitesse, des convertisseurs d'énergie unidirectionnels ou bidirectionnels entre deux réseaux de distribution électriques pouvant avoir des caractéristiques électriques très différentes, ou des convertisseurs de fréquence. La ligne de neutre commune LN peut être reliée à un conducteur de terre selon les types de réseaux ou de protections d'installation. Cette liaison LN peut elle même être un conducteur de masse ou de terre ou une ligne commune de référence entre l'entrée et la sortie du convertisseur.

Les semi-conducteurs de ces convertisseurs sont avantageusement des transistors à grille isolée dits IGBT mais d'autres types de semi-conducteurs peuvent être utilisés. Les bras peuvent comporter plusieurs semi-conducteurs connectés en série et/ou en parallèle en fonction des tensions, des courants ou des puissances électriques utilisées. Par exemple, les tensions d'entrée ou de sortie peuvent être de quelques dizaines de volts à mille volts pour des applications en réseaux basse tension ou avoir des tensions de plusieurs milliers de volts notamment en application moyenne tension. Les courants d'entrée ou de sortie peuvent être de quelques ampères à plus de mille ampères.

Une autre application d'un convertisseur selon l'invention peut être la transformation d'énergie électrique, notamment pour le remplacement de transformateur moyenne tension - basse tension, basse tension - basse tension ou moyenne tension - moyenne tension.

## Revendications

1. Dispositif de commande d'un convertisseur d'énergie électrique comportant des moyens de contrôle (31) de la conduction de bras (2A, 2B, 2C) de semi-conducteurs, ledit convertisseur d'énergie électrique comportant :
- des moyens (19) de redressement pour recevoir une tension (VI) ou un courant électrique d'entrée (20) et pour fournir une tension continue (VDC) sur des lignes (L1 et L2) intermédiaires de tension continue,
- des moyens (C1, C2) de filtrage de tension continue connectés sur les lignes (L1, L2) intermédiaires,
- des moyens (2) de conversion ayant au moins deux bras (2A, 2B) connectés entre lesdites lignes (L1 et L2) de tension continue et des sorties pour convertir ladite tension continue en tensions alternatives (VO) de sortie, et
- une liaison commune (LN) de conducteur de neutre, de masse ou de terre entre une entrée et une sortie,
lesdits moyens (31) de contrôle contrôlant la conduction desdits bras (2A, 2B, 2C) des moyens de conversion (2) et comportant des moyens (7) de traitement pour fournir des signaux (MC1, MC1A, MC1B, MC1C) de modulation de signaux de commande (CVA, CVB, CVC) desdits bras,
- lesdits moyens de contrôle (31) commandent un bras commun (32) comportant des composants électroniques (32A, 32B) de puissance connectés entre lesdites lignes (L1, L2) intermédiaires de tension continue et la liaison (LN) commune, dispositif de commande **caractérisé en ce que**:
- les moyens de traitement comportent des moyens (9) de détermination d'une composante (OM, OM0) générale de commande pour le traitement d'une surmodulation des moyens de conversion (2),
lesdits moyens (7) de traitement commandant ledit bras commun (32) en fonction d'un signal (MCom) de modulation dudit bras commun déterminé avec une consigne de tension de référence ayant une valeur représentative d'une tension entre lesdites lignes intermédiaires et d'un signal représentatif de ladite composante générale (OM, OM1) de commande.

2. Dispositif selon la revendication 1 **caractérisé en ce que** :
- les moyens de commande commandent des bras des moyens (2) de conversion, des bras des moyens (19) de redressement, et le bras commun (32),
- les moyens de traitement (7) fournissant des signaux (MC2A, MC2B, MC2C, MR2A, MR2B, MR2C, MCom) de modulation pour chaque bras en fonction de signaux représentatifs d'une consigne (V2) de tension de référence, et
- lesdits signaux de modulation (MC2A, MC2B, MC2C, MR2A, MR2B, MR2C, MCom) modulant des signaux (F1) de porteuse de même nature pour chaque bras.

3. Dispositif selon la revendication 2 **caractérisé en ce que** les signaux (V2) représentatifs de tension de référence sont les mêmes pour la détermination des signaux de modulation de chaque bras modulé (MC2A, MC2B, MC2C, MR2A, MR2B, MR2C, MCom) du convertisseur et les signaux de porteuse (F1) sont les mêmes pour la détermination des signaux (CVA, CVB, CVC, CRA, CRB, CRC, CCom) de commande de chaque bras du convertisseur.

4. Dispositif selon l'une des revendications 2 ou 3 **caractérisé en ce que** les moyens de traitement comportent des moyens (9) de détermination d'une composante (OM, OM0) générale de commande pour le traitement d'une surmodulation, ladite composante générale de commande (OM, OM0) étant déterminée en fonction de premiers signaux (MC1A, MC1B, MC1C) de modulation des bras des moyens de conversion, et un même signal représentatif de la composante générale (OM, OM1) de commande est utilisé pour traiter des signaux (MC2A, MC2B, MC2C) de modulation des bras des moyens de conversion et le signal (MCom) de modulation du bras commun.

5. Dispositif selon la revendication 4 **caractérisé en ce que** les moyens de traitement utilisent un signal (OM, OM1) représentatif de la composante générale de commande pour traiter des signaux (MR2A, MR2B, MR2C) de modulation des bras des moyens (19) de redressement.

6. Dispositif selon la revendication 5 **caractérisé en ce que** les moyens de traitement comportent des moyens (38, 41, 42, 43, 44, 65) de correction pour corriger ladite composante générale (OM, OM0, OM1) de commande en fonction de signaux (SA, SB, SC) représentatifs de saturation de premiers signaux (MR1A, MR1B, MR1C) de modulation des moyens de redressement.

7. Dispositif selon la revendication 6 **caractérisé en ce que** les moyens de correction comportent des moyens (41, 42, 43) de prévision de valeurs (SA, SB, SC) de saturation et des moyens (44) de réduction d'un signal représentatif (OM1) de la composante générale commande (OM) en fonction desdites valeurs de saturation.

8. Convertisseur d'énergie électrique comportant :
- des moyens (19) de redressement pour recevoir une tension (VI) ou un courant électrique sur des entrées (20) et pour fournir une tension continue (VDC) sur des lignes (L1, L2) intermédiaires de tension continue,
- des moyens (C1, C2) de filtrage de tension continue connectés sur les lignes intermédiaires,
- des moyens (2) de conversion ayant au moins deux bras, connectés entre lesdites lignes de tension continue et des sorties, pour convertir ladite tension continue en tensions alternatives (VO) de sortie,
- une liaison commune (LN) de conducteur de neutre, de masse ou de terre entre une entrée et une sortie, et
des moyens (6) de contrôle pour contrôler la conduction des bras desdits moyens (2) de conversion et comportant des moyens (7) de traitement pour fournir des signaux (MC1, MC1A, MC1B, MC1C) de modulation de signaux de commande desdits bras, convertisseur **caractérisé en ce qu'**il comporte un bras commun (32) comportant des composants électroniques (32A, 32B) de puissance connectés entre lesdites lignes intermédiaires (L1, L2) de tension continue (VDC) et la liaison commune (LN) et un dispositif de commande selon les revendications 1 à 7 pour commander ledit bras commun (32) en fonction d'un signal (MCom) de modulation dudit bras commun déterminé avec une consigne (V2) de tension de référence.

9. Convertisseur selon la revendication 8 **caractérisé en ce que** lesdits moyens de traitement fournissent des signaux (MC2A, MC2B, MC2C) de modulation des bras des moyens (2) de conversion représentatifs de tensions différentes des tensions correspondantes des tensions (VI) d'entrée (20) des moyens (19) de redressement.

10. Convertisseur selon l'une des revendications 8 ou 9 **caractérisé en ce que** lesdits moyens de traitement fournissent des signaux (MC2A, MC2B, MC2C) de modulation des bras des moyens (2) de conversion ayant une fréquence fondamentale de fréquence différente de la fréquence fondamentale de la tension d'entrée (VI) des moyens (19) de redressement.

11. Convertisseur selon l'une des revendications 8 ou 9 **caractérisé en ce que** lesdits moyens de traitement fournissent des signaux (MC2A, MC2B, MC2C) de modulation des bras des moyens (2) de conversion ayant des phases différentes des phases de la tension d'entrée (VI) des moyens (19) de redressement.

12. Convertisseur selon l'une quelconque des revendications 8 à 11 **caractérisé en ce que** lesdits moyens de contrôle du dispositif de commande contrôlent la conduction des bras desdits moyens (2) de conversion et des bras de moyens (19) de redressement de manière réversible, des sorties vers une charge devenant des entrées d'énergie, les moyens de conversion devenant des moyens de redressement, et les entrées devenant des sorties pour fournir de l'énergie électrique à courant alternatif.

13. Procédé de commande d'un convertisseur d'énergie électrique comportant :
- des moyens (19) de redressement pour recevoir une tension ou un courant électrique d'entrée et pour fournir une tension continue sur des lignes intermédiaires (L1, L2) de tension continue,
- des moyens (C1, C2) de filtrage de tension continue connectés sur les lignes intermédiaires,
- des moyens (2) de conversion ayant au moins deux bras (2A, 2B, 2C) connectés entre lesdites lignes de tension continue et des sorties pour convertir ladite tension continue (VDC) en tensions alternatives (VO) de sortie,
- une liaison commune (LN) de conducteur de neutre, de masse ou de terre entre une entrée et une sortie,
- un bras commun (32) comportant des composants électroniques (32A, 32B) de puissance connectés entre lesdites lignes intermédiaires (L1, L2) de tension continue et la liaison commune (LN), et
- des moyens (31) de contrôle contrôlant la conduction des bras desdits moyens de conversion et comportant des moyens de traitement (7) pour fournir des signaux de modulation de signaux (MC1, MC1A, MC1B, MC1C) de commande desdits bras,
procédé **caractérisé en ce qu'**il comporte une première étape (60) de détermination de premiers signaux (MC1A, MC1B, MC1C) de modulation pour la commande de bras des moyens de conversion, et une première étape (63) d'application pour appliquer une consigne de tension de référence (V2) à un signal (MCom) de modulation du bras commun et à des signaux (MC1A, MC1B, MC1C, MC2A, MC2B, MC2C) de modulation pour la commande de bras des moyens de conversion,
- une seconde étape (61) de détermination d'une valeur de composante (OM0) générale de commande pour le traitement d'une surmodulation des moyens de conversion (2) et
- une seconde étape (62) d'application pour appliquer ladite composante générale (OM, OM1) de commande audit signal (MCom) de modulation du bras commun et à des signaux (MC2A, MC2B, MC2C) de modulation pour la commande de bras des moyens de conversion.

14. Procédé selon la revendication 13 **caractérisé en ce qu'**il comporte :
- une troisième étape (64) d'application pour appliquer à des signaux (MR2A, MR2B, MR2C) de modulation pour la commande de bras des moyens (19) de redressement une consigne de tension de référence (V2) et de la valeur de composante générale (OM, OM1) de commande.

15. Procédé selon la revendication 14 **caractérisé en ce qu'**il comporte :
- une étape (66) de détection de saturation de signaux (MR1A, MR1B, MR1C) de modulation de commande de bras des moyens de redressement, et
- une étape (68) de correction de la valeur de composante générale (OM) de commande en fonction de la détection de saturation de signaux de modulation de bras des moyens de redressement.

## Claims

1. A control device of an electric power converter comprising control means (31) for controlling turn-on of semi-conductor arms (2A, 2B, 2C), said electric power converter comprising:
- rectifying means (19) to receive an input electric voltage (VI) or current (20) and to supply a DC voltage (VDC) on intermediate DC voltage lines (L1 and L2),
- DC voltage filtering means (C1, C2) connected on the intermediate lines (L1, L2),
- conversion means (2) having at least two arms (2A, 2B) connected between said DC voltage lines (L1 and L2) and outputs to convert said DC voltage into output AC voltages (VO), and
- a common neutral, ground or earth conductor connection (LN) between an input and an output,
said control means (31) controlling turn-on of said arms (2A, 2B, 2C) of the conversion means (2) and comprising processing means (7) to supply modulation signals (MC1, MC1A, MC1B, MC1C) of control signals (CVA, CVB, CVC) of said arms,
- said control means (31) control a common arm (32) comprising electronic power components (32A, 32B) connected between said intermediate DC voltage lines (L1, L2) and the common connection (LN), a control device **characterized in that**:
- the processing means comprise means (9) for determining a general control component (OM, OM0) for processing an over-modulation of the conversion means (2),
said processing means (7) controlling said common arm (32) according to a modulation signal (MCom) of said common arm determined with a reference voltage setpoint having a value representative of a voltage between said intermediate lines and of a signal representative of said general control component (OM, OM1).

2. Device according to claim 1 **characterized in that**:
- the control means control arms of the conversion means (2), arms of the rectifying means (19), and the common arm (32),
- the processing means (7) supplying modulation signals (MC2A, MC2B, MC2C, MR2A, MR2B, MR2C, MCom) of each arm according to signals representative of a reference voltage setpoint (V2), and
- said modulation signals (MC2A, MC2B, MC2C, MR2A, MR2B, MR2C, MCom) modulating carrier signals (F1) of the same nature for each arm.

3. Device according to claim 2 **characterized in that** the signals (V2) representative of reference voltage are the same for determining modulation signals (MC2A, MC2B, MC2C, MR2A, MR2B, MR2C, MCom) of each modulated arm of the converter and the carrier signals (F1) are the same for determining control signals (CVA, CVB, CVC, CRA, CRB, CRC, CCom) of each arm of the converter.

4. Device according to one of the claims 2 or 3 **characterized in that** the processing means comprise means (9) for determining a general control component (OM, OM0) for processing an over-modulation, said general control component (OM, OM0) being determined according to first modulation signals (MC1A, MC1B, MC1C) of the arms of the conversion means, and one and the same signal representative of the general control component (OM, OM1) is used for processing modulation signals (MC2A, MC2B, MC2C) of the arms of the conversion means and a modulation signal (MCom) of the common arm.

5. Device according to claim 4 **characterized in that** the processing means use a signal (OM, OM1) representative of the general control component to process modulation signals (MR2A, MR2B, MR2C) of the arms of the rectifying means (19).

6. Device according to claim 5 **characterized in that** the processing means comprise correction means (38, 41, 42, 43, 44, 65) to correct said general control component (OM, OM0, OM1) according to signals (SA, SB, SC) representative of saturation of first modulation signals (MR1A, MR1B, MR1C) of the rectifying means.

7. Device according to claim 6 **characterized in that** the correction means comprise means (41, 42, 43) for forecasting saturation values (SA, SB, SC) and means (44) for reducing a signal (OM1) representative of the general control component (OM) according to said saturation values.

8. An electric power converter comprising:
- rectifying means (19) to receive an electric voltage (VI) or current on inputs (20) and to supply a DC voltage (VDC) on intermediate DC voltage lines (L1, L2),
- DC voltage filtering means (C1, C2) connected on the intermediate lines,
- conversion means (2) having at least two arms connected between said DC voltage lines and outputs to convert said DC voltage into output AC voltages (VO),
- a common neutral, ground or earth conductor connection (LN) between an input and an output, and
- control means (6) to control turn-on of the arms of said conversion means (2) and comprising processing means (7) to supply modulation signals (MC1, MC1A, MC1B, MC1C) of control signals of said arms,
a converter **characterized in that** it comprises a common arm (32) comprising electronic power components (32A, 32B) connected between said intermediate DC voltage (VDC) lines (L1, L2) and the common connection (LN) and a control device according to claims 1 to 7 to control said common arm (32) according to a modulation signal (MCom) of said common arm determined with a reference voltage setpoint (V2).

9. Converter according to claim 8 **characterized in that** said processing means supply modulation signals (MC2A, MC2B, MC2C) of the arms of the conversion means (2) representative of different voltages from the corresponding voltages of the input voltages (VI) on input (20) of the rectifying means (19).

10. Converter according to one of claims 8 or 9 **characterized in that** said processing means supply modulation signals (MC2A, MC2B, MC2C) of the arms of the conversion means (2) having a different fundamental frequency from the fundamental frequency of the input voltage (VI) of the rectifying means (19).

11. Converter according to one of claims 8 or 9 **characterized in that** said processing means supply modulation signals (MC2A, MC2B, MC2C) of the arms of the conversion means (2) having different phases from the phases of the input voltage (VI) of the rectifying means (19).

12. Converter according to any one of claims 8 to 11 **characterized in that** said control means of the control device control turn-on of the arms of said conversion means (2) and of the arms (19) of the rectifying means in reversible manner, outputs to a load becoming power inputs, the conversion means becoming rectifying means, and the inputs becoming outputs to supply AC electric power.

13. Control method of an electric power converter comprising:
- rectifying means (19) to receive an input electric voltage or current and to supply a DC voltage on intermediate DC voltage lines (L1, L2),
- DC voltage filtering means (C1, C2) connected on the intermediate lines,
- conversion means (2) having at least two arms (2A, 2B, 2C) connected between said DC voltage lines and outputs to convert said DC voltage (VDC) into output AC voltages (VO),
- a common neutral, ground or earth conductor connection (LN) between an input and an output,
- a common arm (32) comprising electronic power components (32A, 32B) connected between said intermediate DC voltage lines (L1, L2) and the common connection (LN), and
- control means (31) controlling turn-on of the arms of said conversion means and comprising processing means (7) to supply modulation signals (MC1, MC1A, MC1B, MC1C) of control signals of said arms,
a method **characterized in that** it comprises a first step (60) of determining first modulation signals (MC1A, MC1B, MC1C) for controlling arms of the conversion means, and a first application step (63) for applying a reference voltage setpoint (V2) to a modulation signal (MCom) of the common arm and to modulation signals (MC1A, MC1B, MC1C, MC2A, MC2B, MC2C) for controlling arms of the conversion means,
- a second step (61) of determining a general control component value (OM0) for processing an over-modulation of the conversion means (2), and
- a second application step (62) for applying said general control component (OM, OM1) to said common arm modulation signal (MCom) and to modulation signals (MC2A, MC2B, MC2C) for controlling arms of the conversion means.

14. Method according to claim 13 **characterized in that** it comprises:
- a third application step (64) for applying a reference voltage setpoint (V2) and a general control component value setpoint (OM, OM1) to modulation signals (MR2A, MR2B, MR2C) for controlling arms of the rectifying means (19).

15. Method according to claim 14 **characterized in that** it comprises:
- a detection step (66) of saturation of modulation signals (MR1A, MR1B, MR1C) for controlling arms of the rectifying means, and
- a correction step (68) of the general control component value (OM) according to detection of saturation of modulation signals of arms of the rectifying means.

## Patentansprüche

1. Steuerungseinrichtung für einen elektrischen Energiewandler mit Steuerungsmitteln (31) zur Steuerung der Stromleitung von Halbleiterzweigen (2A, 2B, 2C), welcher elektrische Energiewandler
- Gleichrichtmittel (19) zur Aufnahme einer Spannung (VI) oder eines elektrischen Stroms an einem Eingang (20) sowie zur Ausgabe einer Gleichspannung (VDC) an Gleichspannungs-Zwischenkreisleitungen (L1 und L2),
- an die Zwischenkreisleitungen (L1, L2) angeschlossene Siebmittel (C1, C2) zur Gleichspannungsfilterung,
- Umrichtmittel (2) mit mindestens zwei zwischen die genannten Gleichspannungsleitungen (L1 und L2) und Ausgänge geschalteten Zweigen (2A, 2B) zur Umwandlung der genannten Gleichspannung in Ausgangs-Wechselspannungen (VO) sowie
- eine zwischen einen Eingang und einen Ausgang geschaltete gemeinsame Neutralleiter-, Masse- oder Erdungsverbindung (LN) umfasst,
wobei die genannten Steuerungsmittel (31) die Stromleitung in den genannten Zweigen (2A, 2B, 2C) der Umrichtmittel (2) steuern und Verarbeitungsmittel (7) zur Lieferung von Modulationssignalen (MC1, MC1A, MC1B, MC1C) zur Modulation von die genannten Zweige ansteuernden Steuersignalen (CVA, CVB, CVC) umfassen
- und die genannten Steuerungsmittel (31) einen gemeinsamen Zweig (32) mit zwischen die genannten Gleichspannungs-Zwischenkreisleitungen (L1, L2) und die gemeinsame Verbindung (LN) geschalteten leistungselektronischen Bauteilen (32A, 32B) ansteuern,
**dadurch gekennzeichnet, dass**
- die genannten Verarbeitungsmittel Bestimmungsmittel (9) zur Bestimmung einer allgemeinen Steuerungskomponente (OM, OM0) zur Verarbeitung einer Übermodulation der Umrichtmittel (2) umfassen
und die genannten Verarbeitungsmittel (7) den genannten gemeinsamen Zweig (32) in Abhängigkeit von einem bestimmten Modulationssignal (MCom) zur Modulation des genannten gemeinsamen Zweigs mit einem Referenzspannungssollwert ansteuern, dessen Wert eine zwischen den genannten Zwischenkreisleitungen anliegende Spannung und ein die genannte allgemeine Steuerungskomponente (OM, OM1) abbildendes Signal abbildet.

2. Einrichtung nach Anspruch 1, **dadurch gekennzeichnet, dass**
- die Steuermittel Zweige der Umrichtmittel (2), Zweige der Gleichrichtmittel (19) und den gemeinsamen Zweig (32) steuern,
- die Verarbeitungsmittel (7) Modulationssignale (MC2A, MC2B, MC2C, MR2A, MR2B, MR2C, MCom) zur Modulation der einzelnen Zweige in Abhängigkeit von Signalen liefern, die einen Referenzspannungssollwert (V2) abbilden,
- und die genannten Modulationssignale (MC2A, MC2B, MC2C, MR2A, MR2B, MR2C, MCom) in jedem Zweig Trägersignale (F1) der gleichen Art modulieren.

3. Einrichtung nach Anspruch 2, **dadurch gekennzeichnet, dass** die eine Referenzspannung abbildenden Signale (V2) zur Bestimmung der Modulationssignale jedes modulierten Zweigs (MC2A, MC2B, MC2C, MR2A, MR2B, MR2C, MCom) des Umrichters und die Trägersignale (F1) zur Bestimmung der Steuersignale (CVA, CVB, CVC, CRA, CRB, CRC, CCom) jedes Zweigs des Umrichters jeweils gleich sind.

4. Einrichtung nach einem der Ansprüche 2 oder 3, **dadurch gekennzeichnet, dass** die Verarbeitungsmittel Bestimmungsmittel (9) zur Bestimmung einer allgemeinen Steuerungskomponente (OM, OM0) zur Verarbeitung einer Übermodulation umfassen, wobei die genannte allgemeine Steuerungskomponente (OM, OM0) in Abhängigkeit von ersten Modulationssignalen (MC1A, MC1B, MC1C) zur Modulation der Zweige der Umrichtmittel bestimmt wird und zur Verarbeitung der Modulationssignale (MC2A, MC2B, MC2C) zur Modulation der Zweige der Umrichtmittel sowie zur Verarbeitung des Modulationssignals (MCom) zur Modulation des gemeinsamen Zweigs das gleiche, die allgemeine Steuerungskomponente (OM, OM1) abbildende Signal verwendet wird.

5. Einrichtung nach Anspruch 4, **dadurch gekennzeichnet, dass** die Verarbeitungsmittel zur Verarbeitung von Modulationssignalen (MR2A, MR2B, MR2C) zur Modulation der Zweige der Gleichrichtmittel (19) ein die allgemeine Steuerungskomponente abbildendes Signal (OM, OM1) verwenden.

6. Einrichtung nach Anspruch 5, **dadurch gekennzeichnet, dass** die Verarbeitungsmittel Korrekturmittel (38, 41, 42, 43, 44, 65) zur Korrektur der genannten allgemeinen Steuerungskomponente (OM, OM0, OM1) in Abhängigkeit von Signalen (SA, SB, SC) umfassen, die eine Sättigung von ersten Modulationssignalen (MR1A, MR1B, MR1 C) zur Modulation der Gleichrichtmittel abbilden.

7. Einrichtung nach Anspruch 6, **dadurch gekennzeichnet, dass** die Korrekturmittel Mittel (41, 42, 43) zur Früherkennung von Sättigungswerten (SA, SB, SC) sowie Mittel (44) zur Absenkung einer die allgemeine Steuerungskomponente (OM) abbildenden Signals (OM1) in Abhängigkeit von den genannten Sättigungswerten umfassen.

8. Elektrischer Energiewandler mit
- Gleichrichtmitteln (19) zur Aufnahme einer Spannung (VI) oder eines Stroms (20) an Eingängen (20) sowie zur Ausgabe einer Gleichspannung (VDC) an Gleichspannungs-Zwischenkreisleitungen (L1 und L2),
- an die Zwischenkreisleitungen (L1, L2) angeschlossenen Siebmitteln (C1, C2) zur Gleichspannungsfilterung,
- Umrichtmitteln (2), die mindestens zwei zwischen die genannten Gleichspannungsleitungen und Ausgänge geschaltete Zweige zur Umwandlung der genannten Gleichspannung in Ausgangs-Wechselspannungen (VO) umfassen,
- einer zwischen einen Eingang und einen Ausgang geschalteten gemeinsamen Neutralleiter- , Masse- oder Erdungsverbindung (LN),
- Steuerungsmitteln (6) zur Steuerung der Stromleitung in den Zweigen der genannten Umrichtmittel (2), welche Steuerungsmittel Verarbeitungsmittel (7) zur Lieferung von Modulationssignalen (MC1, MC1A, MC1B, MC1C) zur Modulation von die genannten Zweige ansteuernden Steuersignalen umfassen,
welcher Energiewandler **dadurch gekennzeichnet ist, dass** er einen gemeinsamen Zweig (32) mit zwischen die genannten, eine Gleichspannung (VDC) führenden Zwischenkreisleitungen (L1, L2) und die gemeinsame Verbindung (LN) geschalteten leistungselektronischen Bauteilen (32A, 32B) sowie eine Steuereinrichtung nach Anspruch 1 bis 7 umfasst, um den genannten gemeinsamen Zweig (32) in Abhängigkeit von einem bestimmten Modulationssignal (MCom) zur Modulation des genannten gemeinsamen Zweigs mit einem Referenzspannungssollwert (V2) anzusteuern.

9. Umrichter nach Anspruch 8, **dadurch gekennzeichnet, dass** die genannten Verarbeitungsmittel Modulationssignale (MC2A, MC2B, MC2C) zur Modulation der Zweige der Umrichtmittel (2) liefern, welche Signale unterschiedliche Spannungen entsprechend den Eingangsspannungen (VI) am Eingang (20) der Gleichrichtmittel (19) abbilden.

10. Umrichter nach einem der Ansprüche 8 oder 9, **dadurch gekennzeichnet, dass** die genannten Verarbeitungsmittel Modulationssignale (MC2A, MC2B, MC2C) zur Modulation der Zweige der Umrichtmittel (2) liefern, welche Signale eine Grundfrequenz aufweisen, die von der Grundfrequenz der Eingangsspannung (VI) der Gleichrichtmittel (19) abweicht.

11. Umrichter nach einem der Ansprüche 8 oder 9, **dadurch gekennzeichnet, dass** die genannten Verarbeitungsmittel Modulationssignale (MC2A, MC2B, MC2C) zur Modulation der Zweige der Umrichtmittel (2) liefern, welche Signale eine Phasenlage aufweisen, die von der Phasenlage der Eingangsspannung (VI) der Gleichrichtmittel (19) abweicht.

12. Energiewandler nach irgendeinem der Ansprüche 8 bis 11, **dadurch gekennzeichnet, dass** die genannten Steuerungsmittel der Steuerungseinrichtung die Stromleitung in den Zweigen der genannten Umrichtmittel (2) und in den Zweigen von Gleichrichtmitteln (19) mit umkehrbarer Wirkrichtung steuern, wobei an eine Last angeschlossene Ausgänge zu Energieeingängen, die Umrichtmittel zu Gleichrichtmitteln und die Eingänge zu Ausgängen werden, welche elektrische Energie in Form eines Wechselstroms liefern.

13. Steuerungsverfahren für einen elektrischen Energiewandler, das
- Gleichrichtmittel (19) zur Aufnahme einer Eingangsspannung oder eines Eingangsstroms sowie zur Ausgabe einer Gleichspannung an Gleichspannungs-Zwischenkreisleitungen (L1, L2),
- an die Zwischenkreisleitungen angeschlossene Siebmittel (C1, C2) zur Gleichspannungsfilterung,
- Umrichtmittel (2) mit mindestens zwei zwischen die genannten Gleichspannungsleitungen und Ausgänge geschalteten Zweigen (2A, 2B, 2C) zur Umwandlung der genannten Gleichspannung (VDC) in Ausgangs-Wechselspannungen (VO),
- eine zwischen einen Eingang und einen Ausgang geschaltete gemeinsame Neutralleiter-, Masse- oder Erdungsverbindung (LN),
- einen gemeinsamen Zweig (32) mit zwischen die genannten Gleichspannungs-Zwischenkreisleitungen (L1, L2) und die gemeinsame Verbindung (LN) geschalteten leistungselektronischen Bauteilen (32A, 32B),
- sowie Steuerungsmittel (31) zur Steuerung der Stromleitung in den Zweigen der genannten Umrichtmittel umfasst, welche Steuerungsmittel Verarbeitungsmittel (7) zur Lieferung von Modulationssignalen (MC1, MC1A, MC1B, MC1C) zur Ansteuerung der genannten Zweige umfassen, welches Verfahren **dadurch gekennzeichnet ist, dass** es
- einen ersten Bestimmungsschritt (60) zur Bestimmung von ersten Modulationssignalen (MC1A, MC1B, MC1C) zur Ansteuerung von Zweigen der Umrichtmittel,
- einen ersten Ansteuerungsschritt (63) zur Beaufschlagung eines Modulationssignals (Mcom) zur Modulation des gemeinsamen Zweigs sowie von Modulationssignalen zur Ansteuerung von Zweigen der Umrichtmittel mit einen Referenzspannungssollwert (V2),
- einen zweiten Bestimmungsschritt (61) zur Bestimmung eines Wertes einer allgemeinen Steuerungskomponente (OM0) zur Verarbeitung einer Übermodulation der Umrichtmittel (2) sowie
- einen zweiten Ansteuerungsschritt (62) zur Beaufschlagung des genannten Modulationssignals (MCom) zur Modulation des gemeinsamen Zweigs sowie von Modulationssignalen (MC2A, MC2B, MC2C) zur Steuerung von Zweigen der Umrichtmittel mit der genannten allgemeinen Steuerungskomponente (OM, OM1) umfasst.

14. Verfahren nach Anspruch 13, **dadurch gekennzeichnet, dass** es
- einen dritten Ansteuerungsschritt (64) zur Beaufschlagung von Modulationssignalen (MR2A, MR2B, MR2C) zur Steuerung der Zweige der Gleichrichtmittel (19) mit einem Referenzspannungssollwert (V2) und dem Wert der allgemeinen Steuerungskomponente (OM, OM1) umfasst.

15. Verfahren nach Anspruch 14, **dadurch gekennzeichnet, dass** es
- einen Erkennungsschritt (66) zur Erkennung einer Sättigung von Modulationssignalen (MR1A, MR1B, MR1C) zur Steuerung von Zweigen der Gleichrichtmittel sowie
- einen Korrekturschritt (68) zur Korrektur des Werts der allgemeinen Steuerungskomponente (OM) in Abhängigkeit von der Erkennung einer Sättigung von Modulationssignalen zur Modulation von Zweigen der Gleichrichtmittel umfasst.
